# EUROPÄISCHE PATENTANMELDUNG

(11) **EP 1 482 279 A2**
(43) Veröffentlichungstag der Anmeldung: **01.12.2004**
(21) Anmeldenummer: 04012190.7
(22) Anmeldetag: 23.05.2004
(51) Int. Cl.: G01C 21/36, G01C 21/20

(54) **Navigationssystem**

(30) Priorität: 24.05.2003 DE 10323936
(71) Anmelder: Jentro Technologies GmbH, 81671 München (DE)
(72) Erfinder: Hempel, Erno, 81671 München (DE); Zenger, Christoph, 85540 Haar (DE); Pfattner, Marco, 85551 Vaterstetten (DE)
(74) Vertreter: Horns, Axel H.

(57) **Zusammenfassung**

Offenbart ist ein Navigationssystem, umfassend einen mobilen Client-Teil (100) und einen stationären Navigationsserver-Teil (600), wobei der mobile Client-Teil (100) und der stationäre Navigationsrechner-Teil (600) über eine Mobilfunkstrecke (500) miteinander gekoppelt sind, wobei der mobile Client-Teil (100) über die Mobilfunkstrecke (500) Positionsdaten an den stationären Navigationsrechner-Teil (600) überträgt, wobei der Navigationsserver-Teil (600) in Abhängigkeit von den zuvor durch den mobilen Client-Teil (100) übertragenen Positionsdaten Manöveranweisungsdaten berechnet und an den Client-Teil überträgt, und wobei der Client-Teil (100) die von dem Navigationsserver-Teil übertragenen Manöveranweisungsdaten für einen Benutzer wahrnehmbar macht. Ferner wird ein Navigationsverfahren offenbart, bei dem der Navigationsserver-Teil (600) an den Client-Teil wegabschnittsweise Daten zu Wegepunkte und Wegepunkte verbindenden Strecken überträgt, wobei in einem ersten Teilschritt nur Daten betreffend einen ersten Teil der Wegepunkte und Strecken sowie die Daten betreffend das nächste durchzuführende Manöver von dem Navigationsserver-Teil (600) an den Client-Teil (100) übertragen werden, und wobei in einem zweiten Schritt Daten betreffend mindestens einen zweiten Teil (850) der Wegepunkte und Strecken übertragen wird.

## Beschreibung

Die Erfindung betrifft ein elektronisches Navigationssystem, das insbesondere für den Einsatz in Kraftfahrzeugen geeignet ist, sowie ein Navigationsverfahren.

In den vergangenen Jahren haben elektronische Navigationssysteme in zahlreichen Kraftfahrzeugen Einzug gehalten. Diese elektronischen Navigationssysteme umfassen typischerweise einen satellitengestützen Ortsdetektor - beispielsweise auf GPS-Basis - sowie ein Rechnersystem, mit dem aus dem Standort des Fahrzeugs und einem Zielort eine Fahrtroute errechnet werden kann. Dabei errechnet das Navigationssystem auf Grundlage der im Gerät gespeicherten elektronischen Straßendaten automatisch eine detaillierte Route zum Ziel und gibt dem Fahrer vor jeder Abzweigung Abbiegeanweisungen, die beispielsweise dem Fahrer akustisch angesagt werden können.

Üblicherweise werden dazu Navigationsgeräte mit einem lokalen leistungsstarken Rechner und einem großvolumigen Massenspeicher für die Straßennetzdaten versehen und in Kraftfahrzeuge eingebaut. Dabei wird davon ausgegangen, daß sowohl bei On-Board- als auch bei Off-Board- Navigationssystemen die "Guidance", d.h. der Abgleich der stets aktuellen GPS-Koordinaten mit der Wegepunktliste und das sogenannte "Prompting", d.h. die Informationsausgabe an den Fahrer durch Anzeige eines Anzeigesymbols ("Icon", beispielsweise ein nach rechts weisender Pfeil als Anweisung, nach rechts abzubiegen) oder durch eine akustische Ansage lokal, d.h. hochperformant durchgeführt werden muß. Dies erhöht die Beschaffungskosten für ein lokales Navigationssystem. Ferner muß sich der Betreiber des Navigationssystems selber um die Aktualisierung der Straßennetzdaten kümmern, beispielsweise durch periodisch wiederkehrende Beschaffung und Einsetzung von CD-ROM-Speichern mit entsprechenden Daten. Schließlich ist es bei derartigen Systemen nicht ohne weiteres möglich, aktuelle Daten beispielsweise über Verkehrsstaus, Straßensperrungen oder dergleichen in Echtzeit einzuspeisen und bei der Routenplanung zu berücksichtigen.

Aufgabe der Erfindung ist es daher, ein verbessertes Navigationssystem und ein Navigationsverfahren zu schaffen, das insbesondere hinsichtlich dieser Nachteile sich vorteilhaft gegenüber dem Stand der Technik abhebt.

Diese Aufgabe wird erfindungsgemäß gelöst durch ein Navigationssystem mit den Merkmalen des Anspruches 1 sowie durch einen Client-Teil nach Anspruch 62 und durch einen Navigationsserver-Teil nach Anspruch 63. Die Aufgabe wird ferner gelöst durch das Navigationsverfahren nach Anspruch 64. Den abhängigen Ansprüchen sind Weiterentwicklungen des Gegenstandes des Anspruches 1 zu entnehmen.

Bei der erfindungsgemäßen Lösung wird eine Client-Server-Konfiguration eingesetzt, bei der ein Client-System im Kraftfahrzeug über Funk mit einem stationären Navigationsrechner (Server) interagiert. Dabei ist die "Guidance"-Funktionalität auf das "Back-End", d.h. auf den stationären Navigationsrechner verlagert. Das "Back-End" erhält über Funk vom Client-System die aktuelle GPS-Informationen des Fahrzeuges und sendet nach Ausführung der Navigationsberechnungen bestimmte Display- und/oder Ansage-Codes zurück.

In einer Ausführungsform werden Display-Codes in Gestalt von Icons angezeigt. Die Icons können insbesondere den Kreuzungstyp, das durchzuführende Abbiegemanöver, die Straße des nächsten Manövers, die Distanz zum nächsten Manöver (in Meter/Meilen und/oder in Prozent), oder die voraussichtliche Ankunftszeit symbolisieren.

In einer anderen Ausführungsform werden Ansage-Codes in Ansagen umgesetzt, indem eine oder mehrere Sound-Files nacheinander auf dem Client-System abgespielt werden, die dort lokal abgelegt sind.

In einer weiteren Ausführungsform werden Display-Codes und Ansage-Codes gemeinsam eingesetzt.

In einer bevorzugten Ausführungsform wird ein mit einem GPS-Sensor elektrisch gekoppeltes Mobiltelefon oder ein mit einem eingebauten GPS-Sensor versehenes Mobiltelefon als Client-System eingesetzt. Dort, wo GSM-Netze bestehen, können vorteilhaft Mobiltelefone nach dem GSM-Standard eingesetzt werden. Entsprechend können UMTS-Mobiltelefone dort eingesetzt werden, wo eine UMTS-Abdeckung gewährleistet ist.

Bei Ausführungsformen auf der Basis von einem Mobiltelefon kann die Umsetzung von Ansage-Codes in akustisch wahrnehmbare Töne durch Übertragung und Ausgabe von als "Klingeltöne" verarbeitbaren Dateien erfolgen. Ebenso ist es möglich, MP3-codierte Audiodateien im Mobilfunktelefon abzuspeichern und unter der Kontrolle der Software abzuspielen. Auch ist es möglich, per Live-Stream von einem Server über GPRS/UMTS übertragene Datenströme akustisch wiederzugeben, wie beispielsweise "in 300 Metern rechts abbiegen" oder "in 300 Metern" - "rechts" - "abbiegen".

Die Erfindung überwindet auch ein langjähriges Vorurteil der Fachwelt, insoweit die Latenz der serverseitigen "Guidance" von zahlreichen Fachleuten ursprünglich als zu hoch eingeschätzt worden war, um eine brauchbare Fahrzeug-Navigation durchführen zu können. Die Erfahrungen mit der erfindungsgemäßen Lösung haben jedoch gezeigt, daß die Latenz - je nach GPRS Netzauslastung - auf Werte zwischen zwischen ca. 500 ms und ca. 1600 ms begrenzbar ist, was für eine für eine Fahrzeug-Navigation ausreichend ist.

Ein Vorteil der erfindungsgemäßen Lösung liegt in einer wesentlich kürzeren Startup-Zeit, da nicht die Route bzw. der Korridor komplett auf den Client übertragen werden muß, sondern bereits unmittelbar nach Berechnung der Route bzw. des Korridors mit der Guidance begonnen werden kann. Aus diesem Grund bietet sich dieses Verfahren für die ersten 30 bis 60 Sekunden auch für herkömmliche Off-Board Navigationssysteme an, die dann auf eine lokale Berechnung umschalten, sobald die Route bzw. der Korridor auf den Client übertragen wurde.

Als nachteilig könnte der Umstand erscheinen, daß in bestimmten Ausführungsformen eine ständige Datenverbindung (GPRS/UMTS) zwischen Client-System und stationärem Navigationsrechner benötigt wird. Dies trifft jedoch in der Praxis nicht zu. Durch die volumenorientierte GPRS/UMTS Abrechnung der Mobilfunknetzbetreiber ist dies jedoch wirtschaftlich nicht nachteiliger als die Übertragung der Route bzw. des Korridors. Bei herkömmlicher GSM-CSD (Circuit Switched Data) -Einwahl wäre dies wirtschaftlich nicht sinnvoll gewesen, da dort die "Air-Time", d.h. die Verbindungszeit, abgerechnet wird.

Vorteilhaft ist bei der erfindungsgemäßen Lösung insbesondere die Verlagerung von Rechenleistung vom Front-End (Client-System im Fahrzeug) auf das Back-End (stationärer Navigationsrechner), da sich die Anforderungen an das Front-End reduzieren und eine Realisierung auf einem Java-fähigen Mobiltelefon möglich ist, d.h. es ist insbesondere kein leistungsstärkeres Smart-Phone oder ein leistungsstärkerer Personal Digital Assistant ("PDA") notwendig. Die Rechenleistung auf dem Back-End ist zudem deutlich günstiger realisierbar - anstelle einer PDA-Klasse Rechnereinheit für ungefähr 200 EUR kann ein Server für ca. 3.000 EUR mindestens ca. 500 Clients bedienen, d.h. es entstehen Investitionskosten von etwa 6 EUR pro Client.

Als weiterhin besonders vorteilhaft erweist sich ein weiterer Aspekt im Zusammenhang mit der Erfindung, bei dem die "Guidance" segmentiert für eine vorbestimmte Wegstrecke in einem einzigen zusammenhängenden Kommunikationsvorgang vom Navigationsserver an das Client-System übertragen wird. Die "Guidance" innerhalb der Abdeckung eines einzelnen Segmentes kann dann lokal clientseitig abgewickelt werden, ohne daß es während dieser Wegstreckenzeit notwendig zu einem Datenkommunikation mit dem Navigationsserver kommen muß. Hierdurch ist es möglich, die Vorzüge der erfindungsgemäßen Client-/Server-Architektur zu nutzen, ohne auf eine ständige Verfügbarkeit einer Datenkommunikationsverbindung zwischen Client und Server notwendig angewiesen zu sein. Ferner können Kommunikationskosten eingespart werden.

Neben der Möglichkeit, Positionsdaten für die Navigation serverseitig durch einen Satellitennavigationsempfänger zu gewinnen, besteht in anderen Ausführungsformen auch die Möglichkeit, die Positionsdaten vom Betreiber des Mobilfunknetzes zu beziehen. Die Mobilfunknetzsysteme des Mobilfunknetzbetreibers sind insbesondere bei GSM- und UMTS-Netzen mindestens in der Lage, den Ort der Funkzelle per Datenleitung an Dienstleister für "Location based Services" zu übertragen. Vielfach ist aber auch eine wesentlich höhere Genauigkeit möglich, beispielsweise durch Funkzellen-Triangulation. Bei dieser Variante kann durch Fortlassen des Satellitennavigationsempfängers ein erhebliche Gewichts-, Volumen- und Kosteneinsparungseffekt erzielt werden.

Besonders vorteilhaft bei der erfindungsgemäßen Lösung ist insbesondere die Möglichkeit des Einbeziehens von Echtzeitinformation. So kann eine aktuell gemeldete Gefahrenstelle (beispielsweise ein Gegenstand oder Personen auf der Autobahn, Geschwindigkeitskontrollmeßpunkte) sofort vom stationären Navigationsrechner berücksichtigt und an das Client-System weitergegeben werden. Bei der klassischen Off-Board Navigation wäre eine Benachrichtigung notwendig (Server-Push / Service Indication) und die Integration in die Wegeliste clientseitig zu berechnen.

Es versteht sich für den Fachmann, daß das erfindungsgemäße Navigationssystem auch für die Navigation von Fußgängern, Wanderern, Fahrradfahrern, Skifahrern, Wasserfahrzeugen oder Flugzeugen einsetzbar ist, wenngleich auch die erfindungsgemäße Lösung besonders für den Einsatz in Fahrzeugen geeignet ist. Eine konkrete Bezugnahme auf eine Anwendung im Fahrzeugbereich umfaßt insoweit stets auch potentielle Anwendungen in den anderen Einsatzbereichen.

Ein erster Aspekt einer Weiterbildung des erfindungsgemäßen Navigationssystems besteht darin, daß der mobile Client-Teil über die Funkstrecke Positionsdaten an den stationären Navigationsrechner-Teil überträgt und der Navigationsserver-Teil in Abhängigkeit von den zuvor durch den mobilen Client-Teil übertragenen Manöveranweisungsdaten berechnet und an den Client-Teil überträgt

Ein zweiter Aspekt einer Weiterbildung des erfindungsgemäßen Navigationssystems besteht darin, daß der mobile Client-Teil einen Satellitennavigationsempfänger aufweist, der insbesondere als GPS-Empfänger oder GALLILEO-Empfänger ausgestaltet sein kann.

Ein dritter Aspekt einer Weiterbildung des erfindungsgemäßen Navigationssystems besteht darin, daß mindestens eine Positionsbestimmungseinrichtung vorgesehen ist, die die Position des Client-Teils auf der Grundlage von dessen Funksignalabstrahlung bestimmt, beispielsweise durch Funkpeilung, Funktriangulation oder Bestimmung der Funkzelle in einem Mobilfunknetz.

Wenn das Navigationssystem in einem mit Rädern versehenen Landfahrzeug angeordnet ist, besteht gemäß einem vierten Aspekt der Weiterbildung der Erfindung auch die Möglichkeit, daß die Position des Client-Teils zumindest zeitweise durch Fortschreibung einer bekannten Position mittels fortlaufend gewonnener Geschwindigkeitsdaten und Richtungsdaten erfolgt. Hierzu kann ein magnetischer oder elektronischer Kompaß für die Bestimmung der Bewegungsrichtung vorgesehen sein. Die Geschwindigkeits- bzw. Wegedaten können aus dem Tachometer-Subsystem des Landfahrzeuges gewonnen werden. Die aktuelle Position kann dann stets durch fortlaufende Integration der Geschwindigkeit über die Zeit berechnet werden. Bei Vorhandensein eines Beschleunigungsmeßwertgebers kann die Bewegungsstrecke durch zweifache Integration der momentanen Beschleunigung über die Zeit gewonnen werden. Bei Wasserfahrzeugen kann statt eines Tachos eine Logge verwendet weden.

Ein fünfter Aspekt einer Weiterbildung des erfindungsgemäßen Navigationssystems besteht darin, daß der mobile Client-Teil ein Mobiltelefon zum Betrieb in einem Mobilfunknetz umfaßt.

Ein sechster Aspekt einer Weiterbildung des erfindungsgemäßen Navigationssystems besteht dann darin, daß der stationäre Navigationsrechner über eine Koppelschnittstelle zu einem Mobilfunknetz eines Mobilfunkbetreibers Positionsdaten des Client-Teils erhält. Diese Positionsdaten können seitens des Mobilfunknetzbetreibers beispielsweise durch Bestimmung der Funkzelle, in der sich das Mobiltelefon befindet, ermittelt werden. Auch ist es möglich, daß die Positionsdaten des Client-Teils durch Funkzellen-Triangulation erhalten werden. Ferner ist optional auch vorgesehen, daß die Positionsdaten des Client-Teils zumindest teilweise unter Verwendung von Assisted GPS erhalten werden.

Ein siebter Aspekt einer Weiterbildung des erfindungsgemäßen Navigationssystems besteht dann darin, daß das Mobiltelefon ein graphisches Anzeigedisplay aufweist. In diesem Fall ist es möglich, daß mindestens zwei unterschiedlichen möglichen Manöveranweisungsdatenelementen je ein Manöveranweisungs-Icon zugeordnet ist, wobei das Mobiltelefon das von dem Navigationsserver-Teil übertragene Manöveranweisungsdatenelement auf dem graphischen Anzeigedisplay durch Anzeige von dem entsprechenden Manöveranweisungs-Icon darstellt. Besonders vorteilhaft ist eine Ausgestaltung, bei der allen Manöveranweisungsdatenelementen je ein Manöveranweisungs-Icon zugeordnet ist. Ferner ist es möglich, daß das Mobiltelefon das von dem Navigationsserver-Teil übertragene Manöveranweisungsdatenelement mittels einer akustischen Ausgabeeinheit wahrnehmbar macht.

Ein achter Aspekt einer Weiterbildung des erfindungsgemäßen Navigationssystems besteht darin, daß das Mobiltelefon eingerichtet ist, für mindestens ein Manöveranweisungsdatenelement ein komplexes Manöveranweisungs-Icon darzustellen, das situationsabhängig vom Navigationsserver-Teil auf das Mobiltelefon übertragen wird und je eine bestimmte Wegetopographie veranschaulicht, beispielsweise einen Straßentunnel mit mehreren komplexen Ein- und Ausfahrten.

Ein neunter Aspekt einer Weiterbildung des erfindungsgemäßen Navigationssystems besteht darin, daß die Häufigkeit der Datenübertragung zwischen dem Client-Teil und dem Navigationsserver-Teil von der Fortbewegungsgeschwindigkeit des Client-Teils abhängt. Dies kann beispielsweise derart ausgestaltet werden, daß die Häufigkeit der Datenübertragung zwischen dem Client-Teil und dem Navigationsserver-Teil bei Stillstand des Client-Teils vermindert wird, um Datenübertragungskosten und Rechenzeit des Navigationsserver-Teils zu sparen. Ferner ist optional vorgesehen, daß die Häufigkeit der Datenübertragung zwischen dem Client-Teil und dem Navigationsserver-Teil vom Abstand des Client-Teils zum nächsten Manöver abhängt. Im Rahmen der Erfindung realisierbar ist auch, daß die Häufigkeit der Datenübertragung zwischen dem Client-Teil und dem Navigationsserver-Teil vom Typ der befahrenen Straße abhängt, beispielsweise in einer kleinteiligen Altstadt höher ist als auf einer Autobahn.

Ein zehnter Aspekt einer Weiterbildung des erfindungsgemäßen Navigationssystems besteht darin, daß der Navigationsserver-Teil eingerichtet ist, positionsabhängige Sonderdatenelemente an den Client-Teil zu übertragen, die an der errechneten Route oder an der Position des Client-Teils liegende vorbestimmte "Points of Interest" wie Hotels, Sehenswürdigkeiten, Radarfallen etc. pp. bezeichnen. Dieser Vorgang kann positionsabhängig geschehen. Andererseits können auch die Inhalte der Sonderdatenelemente an sich positionsabhängig sein.

Ein elfter Aspekt einer Weiterbildung des erfindungsgemäßen Navigationssystems besteht darin, daß der Navigationsserver-Teil eingerichtet ist, positionsabhängig Sonderdatenelemente an den Client-Teil zu übertragen, die Werbedarbietungen codieren. Bevorzugterweise geschieht dies, wenn der Client-teil stillsteht und die Werbung keine gefahrenträchtige Ablenkung darstellt. Auch ist es vorstellbar, daß Werbeeinblendungen nur dann vom Client-Teil wahrnehmbar gemacht werden, wenn durch einen Bedienvorgang ein Betriebsmodus des Client-Teils eingestellt ist, der Werbung zuläßt. Der Benutzer könnte dann beispielsweise die Wahl haben, gegen einen höheren Entgelttarif sich werbefrei führen zu lassen oder bei einem niedrigeren Entgelttarif gelegentliche Werbeeinblendungen hinzunehmen.

Ein zwölfter Aspekt einer Weiterbildung des erfindungsgemäßen Navigationssystems besteht darin, daß die vom Client-Teil benutzte Route für sofortige und/oder zukünftige Auswertungen temporär und/oder permanent gespeichert wird. Dabei könnte dann beispielsweise ein ausgewählter Wegepunkt aus der gespeicherten Route als neuer Zielpunkt vorgegeben werden.

Ein dreizehnter Aspekt einer Weiterbildung des erfindungsgemäßen Navigationssystems besteht darin, daß die aktuelle Position des Client-Teils als neuer Zielpunkt vorgegeben werden kann. Dies erweist sich besonders dann als nützlich, wenn eine Parkposition eines Fahrzeuges mit einem vom Fahrer getragenen Client-Teil wiedergefunden werden soll.

Ein vierzehnter Aspekt einer Weiterbildung des erfindungsgemäßen Navigationssystems besteht darin, daß ein ausgewählter früherer Wegepunkt aus der gespeicherten Route als neuer Zielpunkt in einen Zielpunktspeicher vorgegeben werden kann.

Ein fünfzehnter Aspekt einer Weiterbildung des erfindungsgemäßen Navigationssystems besteht darin, daß der Client-Teil einen lokales Guidance-Modul umfaßt, wobei während einer Anfangsphase einer Bewegungsstrecke der Navigationsserver-Teil in Abhängigkeit von der Position des mobilen Client-Teil Manöveranweisungsdaten berechnet und an den Client-Teil überträgt, wobei nach dem Ende der Anfangsphase das lokale Guidance-Modul Manöveranweisungsdaten berechnet, und wobei der Client-Teil die von dem Navigationsserver-Teil übertragenen Manöveranweisungsdaten und die durch das lokale Guidance-Modul berechneten Manöveranweisungsdaten für einen Benutzer wahrnehmbar macht. Bevorzugterweise ist die Dauer der Anfangsphase kleiner als 60 s.

Ein sechzehnter Aspekt einer Weiterbildung des erfindungsgemäßen Navigationssystems besteht darin, daß das lokale Guidance-Modul Manöveranweisungsdaten nur solange berechnet, wie der Client-Teil einen während der Anfangsphase festgelegten Navigationskorridor nicht verläßt, wobei nach einem eventuellen Verlassen des Navigationskorridors zumindest zeitweise der Navigationsserver-Teil in Abhängigkeit von der Position des mobilen Client-Teil Manöveranweisungsdaten berechnet und an den Client-Teil überträgt.

Ein siebzehnter Aspekt einer Weiterbildung des erfindungsgemäßen Navigationssystems besteht dann darin, daß der mobile Client-Teil einen programmierbaren Datenprozessor umfaßt, auf dem quasi-gleichzeitig oder zeitlich aufeinanderfolgend mehrere Prozesse ablaufen können, wobei mindestens in einem ersten Prozeß ein Navigationsprogramm, das die Kopplung des mobilen Client-Teils und des stationären Navigationsrechner-Teils über eine Mobilfunkstrecke implementiert und das die von dem Navigationsserver-Teil übertragenen Manöveranweisungsdaten für einen Benutzer wahrnehmbar macht, abläuft, und in einem zweiten Prozeß ein zweites Programm abläuft, wobei das zweite Programm einen Zielpunkt an das Navigationsprogramm übergeben kann.

Ein achtzehnter Aspekt einer Weiterbildung des erfindungsgemäßen Navigationssystems besteht darin, daß der Client-Teil eine externe Datenschnittstelle aufweist, mittels der eine Datenverbindung mit mindestens einem externen Gerät hergestellt werden kann. Diese Datenschnittstelle kann insbesondere als elektrischen Steckverbinder, als Leitung nach dem RS232-Standard, als Bluetooth-Datenfunkschnittstelle, als WLAN/WiFi-Datenfunkschnittstelle oder als IrDA-Datenübertragungseinrichtung realisiert werden. Auch ist es möglich, daß die externe Datenschnittstelle eine durch das Mobilfunknetz vermittelte Datenfunkschnittstelle gemäß einem Standard aus der die Standards "SMS", "EMS", "MMS" und "WAP Push" umfassenden Gruppe von Standards umfaßt.

Ein neunzehnter Aspekt einer Weiterbildung des erfindungsgemäßen Navigationssystems besteht darin, daß der Client-Teil darauf eingerichtet ist, daß das mindestens eine externe Gerät über die externe Datenschnittstelle einen Zielpunkt vorgeben kann.

Ein zwanzigster Aspekt einer Weiterbildung des erfindungsgemäßen Navigationssystems besteht darin, daß der Client-Teil darauf eingerichtet ist, daß die Datenkommunikation zwischen dem Client-Teil und dem mindestens einen externen Gerät unter Verwendung des TCP/IP-Datenübertragungsprotokolls abgewickelt wird.

Ein einundzwanzigster Aspekt einer Weiterbildung des erfindungsgemäßen Navigationssystems besteht darin, daß der Client-Teil darauf eingerichtet ist, daß das mindestens eine externe Gerät dem Client-Teil mindestens einen Zielpunkt vorgeben kann.

Ein zweiundzwanzigster Aspekt einer Weiterbildung des erfindungsgemäßen Navigationssystems besteht darin, daß der Client-Teil darauf eingerichtet ist, daß das mindestens eine externe Gerät dem Client-Teil ein anderes Navigationssystem ist, da in einer Weiterbildung einen Zielpunkt vorgeben kann.

Im folgenden wird anhand der Zeichnung eine Ausführungsform der Erfindung näher erläutert:
- **Fig. 1**: zeigt schematisch ein Blockdiagramm eines erfindungsgemäßen Navigationssystem zur Leitung einer Person von einer momentanen Position zu einem beliebigen Zielort.
- **Fig. 2**: zeigt schematisch in einem Blockdiagramm die Interaktion zwischen einem mobilen Client-System und einem stationären Navigationsrechner.
- **Fig.3**: zeigt schematisch eine graphische Navigationsanzeige auf einem Display eines Mobilfunktelefones.
- **Fig.4**: zeigt eine detailliertere schematische Blockansicht des erfindungsgemäßen Navigationssystems.
- **Fig.5**: zeigt eine detailliertere schematische Blockansicht einer anderen Ausführungsform des erfindungsgemäßen Navigationssystems.
- **Fig. 6**: zeigt schematisch anhand eines Graphen einen mit dem erfindungsgemäßen Navigationssystem ausgeführten Navigationsvorgang entlang eines Bewegungspfades.
- **Fig. 7**: zeigt ein Flußdiagramm eines Ablaufes bei einem weiter verbesserten erfindungsgemäßen Navigationssystem.
- **Fig. 8**: zeigt schematisch anhand eines Graphen einen mit dem verbesserten erfindungsgemäßen Navigationssystem nach Fig. 7 ausgeführten Navigationsvorgang entlang eines Bewegungspfades.

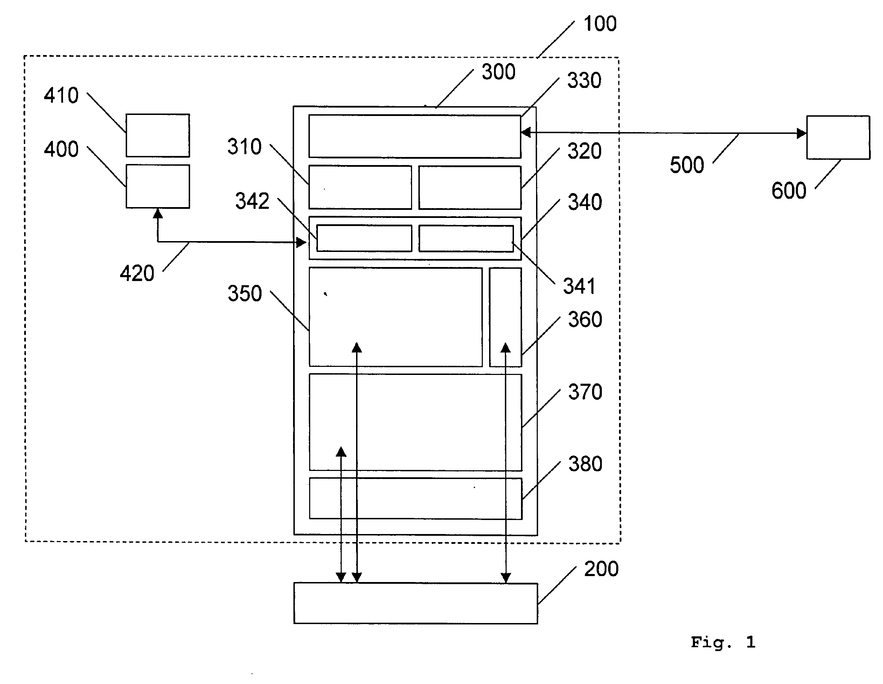

Fig. 1 zeigt ein Navigationsgerät 100 zur Leitung einer Person 200 von der momentanen Position zu einem wählbaren Zielort. Die Person 200 führt ein Mobiltelefon 300 mit sich. Das Mobilfunktelefon 300 umfaßt insbesondere einen Mobilfunksender 310, einen Mobilfunkempfänger 320, eine Antenne 330, eine Rechnereinheit 340, ein Anzeigedisplay 350, eine akustischen Ausgabemöglichkeit 360, ein Tastenfeld 370 und einen Akku 380. Die auf der Rechnereinheit 340 ablaufende Software umfaßt insbesondere eine Telefonie-Software 341 und eine Navigationssoftware 342. Die Navigationssoftware 342 wird in einer bevorzugten Ausführungsform als Java-Anwendung in das Gerät 300 geladen und ausgeführt. Andere Ausführungsformen basieren auf anderen Programmierkonzepten, beispielsweise in Gestalt der Smartphone-Software 2002 ("Stinger") der Firma Microsoft oder der Symbian-Programmierplattform der Symbian Ltd. Ferner kommen in Betracht Ausführungsformen auf der Grundlage der "Series 60" Programmierplattform der Firma Nokia Corporation.

Am Mobilfunktelefon 300 ist über eine Datenleitung 420 ein "Global Positioning System" (GPS) -Empfänger 400 angeschlossen, der über eine Antenne 410 seine jeweils aktuelle Position und damit auch die der Person 200 bestimmen kann. Unter der Kontrolle der Navigationssoftware 342 werden diese Positionsdaten weiterverarbeitet.

Die Person 200 kann mit dem Mobilfunktelefon 300 insbesondere durch Lesen des Anzeigedisplays 350, durch Hören der akustischen Ausgabemöglichkeit 360 sowie durch Eingaben auf dem Tastenfeld 370 interagieren. Die Navigationssoftware 342 kann über das Tastenfeld 370 ausgewählt und gestartet werden. Nach dem Start überprüft diese den korrekten Anschluß des GPS-Empfängers 400 über die Datenleitung 420 und initialisiert den GPS-Empfänger 400, so daß eine Datenkommunikation zwischen dem GPS-Empfänger 400 und dem Mobiltelefon 300 ermöglicht wird.

Die Navigationssoftware 342 kann über den Mobilfunksender 310, den Mobilfunkempfänger 320, die Antenne 330 und über die Infrastruktur eines Mobilfunkbetreibers 500 mit einem Internet-Dienst 600 kommunizieren. In einer bevorzugten Ausführungsform kann die Navigationssoftware 342 über das "General Radio Package System"-Protokoll ("GRPS") und über das "Transmission Control Protocol / Internet Protocol" (TCP/IP-Protokoll) mit dem Internet-Dienst 600 kommunizieren. Die Kommunikation erfolgt hierbei entweder über "Hypertext Transport Protocol" (HTTP) -Requests bzw. über Requests für verschlüsseltes HTTP ("HTTPS") von der Navigationssoftware 342, die der Internet-Dienst 600 über HTTP-Responses beantwortet. Alternativ kann von der Navigationssoftware 342 eine TCP/IP Socket-Connection über GPRS zum Internet-Dienst 600 aufgebaut werden, die auch eine bidirektionale Kommunikation zuläßt.

Zunächst führt die Navigationssoftware 342 einen Authentifizierungsprozess durch. Hierbei wird eine Session-ID generiert. Sollte die GPRS Verbindung z.B. wegen mangelhaftem Empfang oder Timeout beendet worden sein, wird diese automatisch erneut aufgebaut. Sollte zur Kommunikation eine TCP/IP Socket-Connection aufgebaut worden sein und abgebrochen sein, wird diese automatisch wieder aufgebaut und die Session-ID des Authentifizierungsprozesses verwendet.

Nach erfolgreicher Authentifizierung kann die Person 200 über das Tastenfeld 370 den Menüpunkt "Neue Zieladresse" auswählen und in einem Eingabeformular die gewünschte Zieladresse eingeben. Diese wird zusammen mit der aktuellen Position an den Internet-Dienst 600 gesendet. Dort wird die Route bzw. der Korridor zwischen der aktuellen Position und der eingegebenen Zieladresse berechnet und so optimal aufbereitet, daß der Internet-Dienst zu jeder Position innerhalb des Korridors das nächste Fahr- bzw. Gehmanöver zurückgeben kann. Persönliche Einstellungen, wie Längeneinheiten (Kilometer/Meter bzw. Meilen,Feet) oder bei Fahrzeugnavigation Einstellungen, wie Geschwindigkeitsprofil des Fahrzeuges, Meiden von Mautstrecken sowie eine persönliche Zielliste, die letzten Ziele oder das aktuelle Ziel werden zentral auf dem Internet-Dienst 600 gespeichert und können über das Mobilfunktelefon 300 oder über andere am Internet angeschlossenen Geräte oder Dienste geändert werden. Ebenso kann die Zieladresse über andere am Internet angeschlossenen Geräte oder Dienste geändert bzw. eingegeben werden. Zudem kann die Navigationssoftware 342 auf das Adreßverzeichnis der Telefonie-Software 341 zum Abruf einer Zieladresse zugreifen.

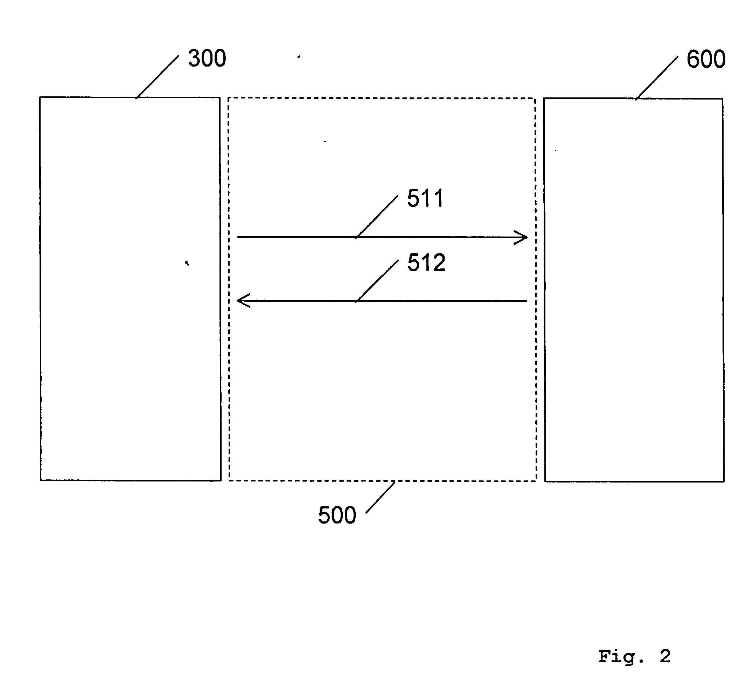

**Fig. 2** zeigt schematisch in einem Blockdiagramm die Interaktion zwischen einem mobilen Client-System und einem stationären Navigationsrechner. Nach Eingabe der Zieladresse am Mobilfunktelefon 300 und Berechnung der Route bzw. des Korridors auf dem Internet-Dienst 600, geht die Navigationssoftware 342 in den Manövermodus. Im Manövermodus sendet die Navigationssoftware 342 die Position, Orientierung und Geschwindigkeit der Person 200 in einem Sende-Datentelegramm 511 (**Fig. 2**) an den Internet-Dienst 600. Dieser sendet darauf ein Antwort-Datentelegramm 512 (**Fig. 2**) mit Angaben zum nächsten Fahr- bzw. Gehmanöver. Dieser Vorgang wird in regelmäßigen Zeitabständen wiederholt.

Die Navigationssoftware 342 liest die Daten des GPS-Empfängers 400 ein. Dieser sendet Zeichenketten über die serielle Datenleitung 420, die konform gebildet sind mit dem Standard NMEA-0183 (National Marine Electronics Association, Nationale Vereinigung für Marineelektronik). Der NMEA-0183-Standard legt technische Rahmenbedingungen fest, um einen Datenaustausch zwischen verschiedenen Geräten aus der Marineelektronik zu ermöglichen; er hat sich aber insbesondere auch bei zahlreichen landgebundenen GPS-Anwendungen zur Übertragung von Daten aus einem GPS-Empfänger an eine Auswertevorrichtung durchgesetzt. Die Spezifikation des NMEA-0183-Standards ist erhältlich über die NMEA, 7 Riggs Ave., Severna Park, MD 21146, USA.

Der GPS Empfänger 400 überträgt in festen Zeitabständen kontinuierlich Datensätze an das Mobiltelefon 300. Beim NMEA-Protokoll stellt je eine Zeile mit einer Nachricht aus ASCII-Zeichen einen kompletten Datensatz ("NMEA Message') dar. Eine einem $-Zeichen folgende Zeichenkette kennzeichnet den Typ der Nachricht. Eine Zeile mit vorangestellten "$GPRMC" enthält somit eine NMEA "RMC"-Nachricht; eine Zeile mit vorangestelltem "$GPGLL" eine sogenannte "GLL"-Nachricht.

Die Navigationssoftware 342 stellt den GPS-Empfänger bei der Initialisierung so ein, daß dieser nur die notwendigen Daten und diese in einer geeigneten Baudrate und in geeigneten Zeitabständen sendet.

Hierbei kommt nur der Datensatz in Anwendung, der mit "$GPRMC" am Beginn der Zeichenkette gekennzeichnet ist, z.B.:
$GPRMC,134812,A,4806.5681,N,01143.2519, E,030.4,299.0,110403,001.5, E*78 <CR> Dieser beinhaltet (mit Kommata getrennt):
   - die Uhrzeit (Time of fix),
   - die Gültigkeitskennung (A=gültig, V=ungültig),
   - den Breitengrad mit N=Nord bzw. S=South,
   - den Längengrad mit E=East bzw. W=West,
   - die Geschwindigkeit (in Knoten),
   - den Kurs, Datum, Magnetische Variation und
   - eine Prüfsumme.

Das Datentelegramm wird durch ein Zeilenendsymbol "<CR>", beispielsweise das ASCII-Zeichen "Carriage Return", abgeschlossen.

Die Navigationssoftware 342 verarbeitet in einer bevorzugten Ausführungsform aus diesem Datensatz nur vorbestimmte ausgewählte relevante Daten:
- die Uhrzeit,
- die Gültigkeitskennung,
- den Längen- und Breitengrad,
- die Geschwindigkeit und
- den Kurs
und setzt ein Sende-Datentelegramm 511 zusammen. Dieses wird an den Internet-Dienst 600 gesendet, z.B.:
134812,A,4806.5681,N,01143.2519,E,030.4,299<CR>

Der Internet-Dienst 600 antwortet auf jedes Sende-Datentelegramm mit einem Antwort-Datentelegramm 512. Dieses enthält Angaben zum nächsten Fahr- bzw. Gehmanöver, z.B.:
5300m,200m,70,69905,4,B304\Münchner Strasse, Blumenstraße,3,16:43<CR>

Hierbei werden, durch Kommata getrennt, folgende Daten übergeben:
- Entfernung zum Ziel,
- Entfernung zum Fahr- bzw. Gehmanöver,
- Füllstand des Entfernungsbalkens zum nächsten Manöver in Prozent,
- Code des Manöver-Icons,
- Straßentyp der aktuellen Straße,
- Straßenname der aktuellen Straße,
- Straßenname der Straße nach dem Manöver,
- Code eines abzugebenden Tonsignals bzw. Ansage, und
- die voraussichtliche Ankunftszeit.

Daten, die sich bezüglich des letzten Antwort-Datentelegramms nicht geändert haben, werden bevorzugterweise nicht wiederholt gesendet, sondern ausgelassen; z.B. wird 100 Meter nach dem oben aufgeführten Antwort-Datentelegramm folgendes Antwort-Datentelegramm gesendet:
5200m, 100m, 80,,,,,

D.h. die Entfernung zum Ziel und die Entfernung zum Fahr- bzw. Gehmanöver sowie der Füllstand des Entfernungsbalkens zum nächsten Manöver hat sich verändert, nicht jedoch der Code des Manöver-Icons, der Straßenname der aktuellen Straße, der Straßenname der Straße nach dem Manöver, der Code eines abzugebenden Tonsignals bzw. Ansage und auch nicht die voraussichtliche Ankunftszeit.

Fehlercodes, wie "Straßennetz verlassen" werden ebenfalls kodiert übergeben:
E:12

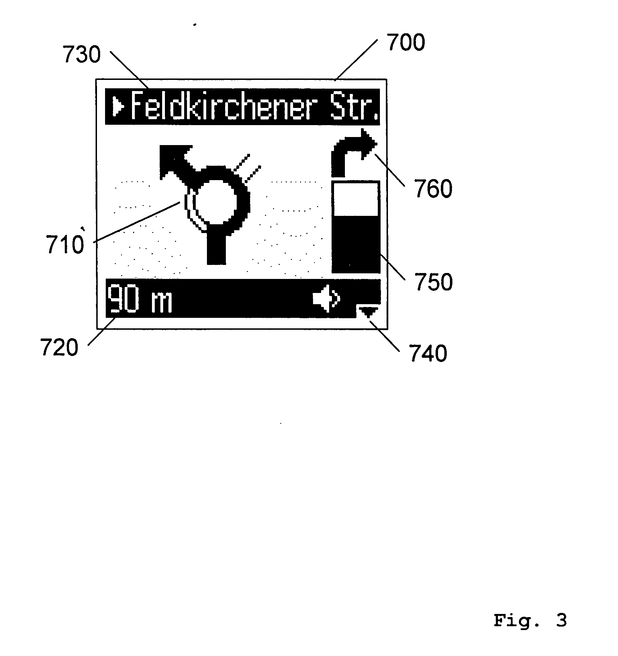

Die Navigationssoftware 342 verarbeitet die empfangenen Antwort-Datentelegramme, indem auf dem Anzeigedisplay 350 die Daten in einer geeigneten Form für die Person 200 sichtbar ausgegeben werden. **Fig. 3** zeigt schematisch eine exemplarische graphische Navigationsanzeige 700 auf einem Display eines Mobilfunktelefones. Wenn der Geradeauspfeil im Display erscheint, zeigt eine Straßennamenanzeige 730 im oberen Bereich den Namen der im Anzeigezeitpunkt befahrenen Straße an. Ansonsten zeigt die Straßennamenanzeige 730 den Namen derjenigen Straße an, in die das gerade anstehende Manöver abgebogen werden soll. Im unteren Displaybereich ist eine Entfernungsanzeige angegeben, die die noch zu fahrende Fahrtstrecke bis zum nächsten Manöver anzeigt. Ein Anzeigeflächensymbol 740 zeigt gegebenenfalls an, daß über die darunterliegende Taste des Mobiltelefons ein Menü auswählbar ist, über das eine akustische Ausgabe aktivierbar ist. Im Mittenbereich des Displays wird ein Manövericon 710 angezeigt, das das in Kürze vorzunehmende Manöver eingängig visuell symbolisiert; im dargestellten Fall soll ein Kreisverkehr befahren und bei der zweiten Abfahrt wieder verlassen werden. Ein Distanzbalken 750, der sich mit zunehmender Annäherung an das Manöver vollflächig füllt oder - in einer anderen Ausführungsform - leert, zeigt die Entfernung zum nächsten Manöver an. Darüber befindet sich eine Anzeige 760 für das übernächste Manöver. Diese dient für den Fahrer dazu, bereits beim oder vor dem nächsten Manöver auf die optimalen Fahrspur zu wechseln

Die Navigationssoftware 342 verarbeitet die empfangenen Antwort-Datentelegramme, indem die abzugebenden Tonsignale mit der akustischen Ausgabemöglichkeit 360 für die Person 200 hörbar gemacht werden. Sofern das Mobilfunktelefon 300 die Ausgabe von Sound-Dateien erlaubt, können in einer bevorzugten Ausführungsform die Manöver für die Person 200 verständlich angesagt werden, beispielsweise "in 300 Metern rechts abbiegen".

Der Mobilfunkbetreiber rechnet die Nutzung des Datendienstes GPRS über den das Mobilfunktelefon 300 über die Infrastruktur eines Mobilfunkbetreibers 500 mit dem Internet-Dienst 600 kommuniziert nach Datenvolumen ab. Gleiches ist auch bei Nutzung von UMTS realisierbar. Aus Kostengründen wird dieses möglichst gering gehalten. Aus diesem Grund werden die Sende- und Antwort-Datentelegramme längenoptimiert und kodiert.

Die Navigationssoftware 342 sendet das Sende-Datentelegramme normalerweise in regelmäßigen Zeitabständen an den Internet-Dienst 600. Der Zeitabstand ist davon abhängig, ob die Person 200 sich zu Fuß oder mit einem Fahrzeug bewegt. Falls sich die Person 200 mit einem Fahrzeug bewegt, ist zudem der Zeitabstand zudem davon abhängig, auf welchem Straßentyp, z.B. Autobahn oder innerstädtische Straße, sich das Fahrzeug bewegt. Auf Autobahnen ist der Zeitabstand länger, da hier weniger Abbiegemöglichkeiten vorhanden sind und die Wahrscheinlichkeit eines Fehlmanövers deutlich geringer ist als auf innerstädtischen Straßen.

Der Zeitabstand verringert sich um so mehr, je näher die Person 200 an das nächste Manöver kommt. Kurz vor einem Manöver bis nach erfolgtem Manöver ist der Zeitabstand möglichst gering. Dies wird dadurch erreicht, daß auf jedes empfangene Antwort-Datentelegramm sofort ein Sende-Datentelegramm gesendet wird.

Keine weiteren Sende-Datentelegramme werden gesendet, wenn die Person 200 an der gleichen Position stehen bleibt, z.B. im Stau oder an der Ampel. Ebenso wenn keine GPS-Informationen verfügbar sind, z.B. im Tunnel, Parkhäusern, -Garagen oder in Gebäuden.

Da die Positionsbestimmung per GPS teilweise ungenau ist, kann es vorkommen, daß die Position, die im Sende-Telegramm übergeben wird, nicht auf der Straße befindet. Der Internet-Dienst 600 gibt dann im Antwort-Datentelegramm zurück, daß sich das Fahrzeug nicht auf einer Straße befindet. Hierbei wird dann unabhängig vom aktuellen Zeitabstand sofort das Sende-Datentelegramm wiederholt und das Antwort-Datentelegramm ausgewertet. Erst wenn dieses wiederum ergibt, daß sich das Fahrzeug nicht auf einer Straße befindet, wird eine entsprechende Anzeige bzw. Ansage ausgegeben und auf den kürzesten Zeitabstand übergegangen.

Bei Fahrten in Tunnels ist kein Empfang des GPS-Satellitensignals möglich. Hier können die Positionsdaten beispielsweise über einen elektronischen Kompaß (nicht dargestellt) kombiniert mit dem Tachosignal des Fahrzeuges oder mit einem anderen Strecken-ermittelnden Sensor, beispielsweise einem Beschleunigungssensor (nicht dargestellt), fortgeführt werden, um eine Navigation im Tunnel zu ermöglichen. Gleiches gilt für Fußgängernavigation in Gebäuden. Alternativ kann im Tunnel die Entfernungsanzeige unterdrückt werden und der komplette Tunnel samt Abfahrten oder Verzweigungen angezeigt werden.

Die Person 200 hat die Möglichkeit über das Tastenfeld 370 den Zeitabstand auf ein Minimum zu reduzieren. Dies ist beispielsweise dann sinnvoll, wenn der Zeitabstand relativ hoch ist, die Person aber ein unerwartetes und fehlerhaftes Manöver eingeleitet hat, z.B. Verlassen der Autobahn über eine Ausfahrt, mitten auf der Strecke. Die Person 200 hat zudem die Möglichkeit, über das Tastenfeld 370 die Navigationssoftware 342 auf einen Standby-Modus zu schalten, z.B. bei einer kurzfristigen Unterbrechung der Fahrt.

Wenn die Person 200 ein Fehlmanöver fährt bzw. geht, reagiert der Internet-Dienst 600 relativ schnell mit einer korrigierenden bzw. von diesem Punkt an optimalen Route, da dieser für jede Route bereits einen kompletten Korridor berechnet hat. Der Internet-Dienst 600 muß hierfür also keine erneute Route errechnen.

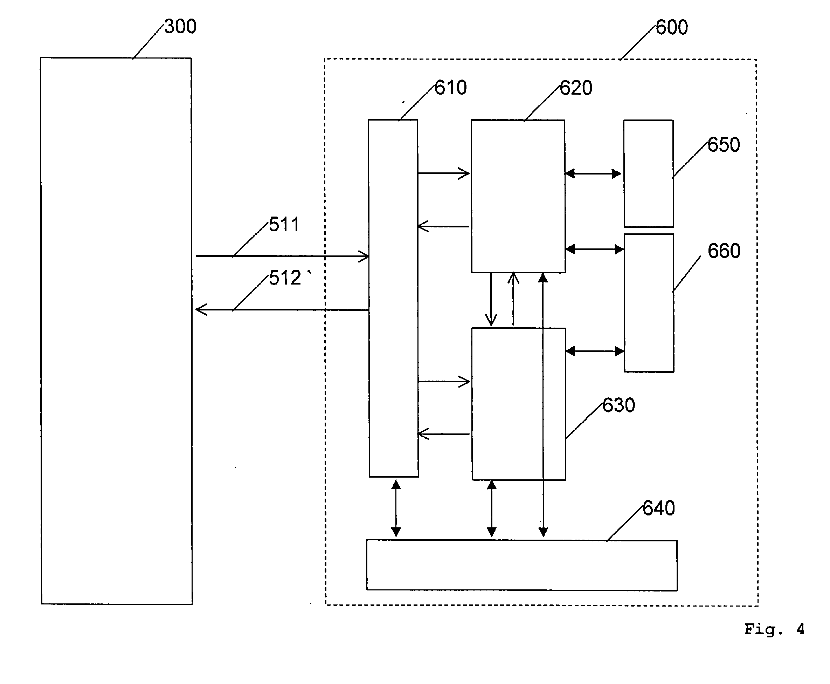

Fig. 4 zeigt eine detailliertere schematische Blockansicht des erfindungsgemäßen Navigationssystems. Der Navigations- Internet-Dienst 600 beinhaltet insbesondere ein Kommunikationsmodul 610, das die Anfragen des Mobilfunktelefons 300 entgegennimmt und die Antworten zurückgibt. Mit Hilfe des Benutzerverwaltungsmoduls 640 überprüft es die Zugriffsberechtigung. Das Benutzerverwaltungsmodul 640 übernimmt zudem die Abrechnung des Dienstes und die Zuordnung Benutzer-zu-SessionlD. Das Routing-Modul 620 berechnet die über das Kommunikationsmodul 610 angeforderte Route bzw. den Korridor zwischen dem Startpunkt und der Zieladresse und gibt diese(n) an ein Guidance-Modul 630 weiter. Sollte die Zieladresse nicht eindeutig oder ungültig sein, gibt das Routing-Modul 620 über das Kommunikationsmodul 610 eine Auswahlliste bzw. eine Fehlermeldung zurück. Das Guidance-Modul 630 hält den Korridor im Arbeitsspeicher und gibt zu jedem über das Kommunikationsmodul 610 übergebenen GPS-Datensatz eine Manöver-Beschreibung über das Kommunikationsmodul 610 zurück bzw. fordert ein Update der Route bzw. des Korridors beim Routing-Modul 620 an, falls der Korridor verlassen wurde oder dieser aufgefrischt werden soll.

Das Routing-Modul 620 verwendet bei der Berechnung der Route bzw. des Korridors bevorzugterweise Kartenmaterial diverser Anbieter wie beispielsweise Navtech (Navigation Technologies Corporation, Chicago,lllinois, USA) oder Tele Atlas (Tele Atlas Deutschland GmbH) und berücksichtigt hierbei die für die Route relevanten Verkehrsinformationen aus diversen Verkehrsinformationsquellen 660 wie beispielsweise den RDS-TMC-Service (Radio Daten System, Traffic Message Channel), den ADAC-Verkehrsservice oder den Dienst der Gesellschaft ddg (Gesellschaft für Verkehrsdaten). Aktuelle Informationen der Verkehrsinformationsquellen 660 können in einer bevorzugten Ausführungsform zudem an das Guidance-Modul 630 weitergegeben werden, um diese "in Echtzeit" an den Benutzer weiterzugeben.

Die Module des Navigations- Internet-Diensts 600 können bei Bedarf aus Redundanzund Performance-Gründen auf unterschiedliche Computersysteme verteilt werden.

Der zuvor beschriebene Navigations- Internet-Dienst 600 berücksichtigt zentral die für die Route relevanten Verkehrsinformationen. Weitere Informationen, beispielsweise POI (Points of Interest wie z.B. Restaurants, Tankstellen, Hotels) können als Ziele abrufbar gemacht werden, sowie am "Wegesrand" liegende Pols (positionsbezogen) mit den Manöver-Antwort-Datentelegrammen mitgeschickt und angezeigt werden. Das gleiche gilt für Informationen, wie Falschfahrer, Gegenstände auf der Fahrbahn, Radarfallen oder Werbung.

So kann insbesondere beim Stand des Fahrzeuges, z.B. im Stau oder an der Ampel ggf. Information oder Werbung, ggf. auch positionsbezogen visuell angezeigt bzw. akustisch personenbezogen abgespielt werden.

Beim Wechsel von Fahrzeug zu Fußgängernavigation kann in einer bevorzugten Ausführungsform die Position des geparkten Fahrzeuges clientseitig oder serverseitig gespeichert werden, um das Fahrzeug wieder auffinden zu können.

Ferner ist eine andere Ausführungsform vorgesehen, bei der Personen per Knopfdruck anderen Personen ihren Standort mitteilen und/oder sich per Navigation zur Person führen lassen können.

Im Internet-Dienst 600 können zudem die durch den Navigationsdienst generierten Positionsdaten zu Flottenüberwachungs- und Flottensteuerungszwecken, Personenüberwachungs- und -steuerungszwecken oder die Routendaten zu Fahrtenbuchzwekken genutzt werden. Auch die Navigationssoftware 342 kann um eine Dispositionsanwendung ergänzt werden: Auftrags-, Touren-, Status- und Nachrichtenmanagement.

Ein Push-Mechanismus ist im normalen Manövermodus nicht erforderlich, da mindestens alle ca. 20 Sekunden eine Anfrage erfolgt.

Neben dem Manövermodus gibt es den "Info-Modus". Hier wird die Person 200 nicht an eine Zieladresse geführt, sondern bewegt sich vielmehr ohne bestimmtes Ziel. Hier kann mit einem einstellbaren Zeitabstand die Position geschickt werden und am "Wegesrand" liegende POls (positionsbezogen) oder Informationen, wie Falschfahrer, Gegenstände auf der Fahrbahn, Radarfallen, oder Werbung angezeigt werden. Auch hier können die generierten Positionsdaten zu Flottenüberwachungs- und Flottensteuerungszwecken, Personenüberwachungs- und steuerungszwecken oder die Routendaten zu Fahrtenbuchzwecken genutzt werden.

Desweiteren gibt es den Überwachungsmodus, der mit bzw. ohne Kenntnis der Person 200 gestartet wird. Hier kann zu Überwachungszwecken an den Internet-Dienst 600 in regelmäßigen Zeitabständen, zu bestimmten Uhrzeiten, bei Eintritt bzw. Austritt aus geografischen Gebieten die Position geschickt werden und weiterverarbeitet werden. Dies kann zu Flotten-, Waren- oder Personenüberwachungszwecken genutzt werden.

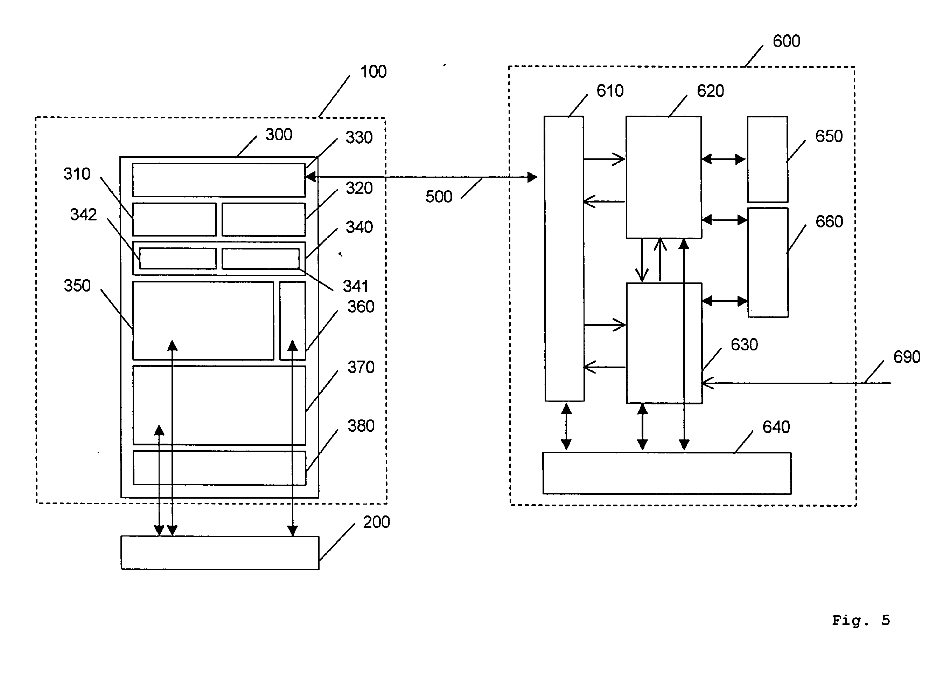

Fig. 5 zeigt eine detailliertere schematische Blockansicht einer anderen Ausführungsform des erfindungsgemäßen Navigationssystems mit einem Navigationsgerät 100 zur Leitung einer Person 200 von der momentanen Position zu einem wählbaren Zielort. Die Person 200 führt ein Mobiltelefon 300 mit sich. Das Mobilfunktelefon 300 umfaßt insbesondere einen Mobilfunksender 310, einen Mobilfunkempfänger 320, eine Antenne 330, eine Rechnereinheit 340, ein Anzeigedisplay 350, eine akustischen Ausgabemöglichkeit 360, ein Tastenfeld 370 und einen Akku 380. Die auf der Rechnereinheit 340 ablaufende Software umfaßt insbesondere eine Telefonie-Software 341 und eine Navigationssoftware 342. Die Navigationssoftware 342 wird in einer bevorzugten Ausführungsform als Java-Anwendung in das Gerät 300 geladen und ausgeführt. Der Aufbau des Client-Teils 100 entspricht grundsätzlich derjenigen, die in Fig. 1 angegeben ist; jedoch kann bei dieser Ausführungsform der Satellitennavigationsempfänger fortgelassen werden, da die Positionsdaten auf andere Weise gewonnen werden.

Der Navigations-Internet-Dienst 600 beinhaltet insbesondere ein Kommunikationsmodul 610, das die Anfragen des Mobilfunktelefons 300 entgegennimmt und die Antworten zurückgibt. Der Aufbau des Navigations-Internet-Dienstes 600 entsprich grundsätzlich der in **Fig. 4** angegebenen Struktur. Über eine Schnittstelle 690 zu einer Basisstation des Mobilfunknetzbetreibers (nicht dargestellt) können das Mobilfunktelefon 300 betreffende Positionsdaten aus mobilfunknetzwerkbasierter Positionsbestimmung dem Guidance-Modul 630 zugeführt werden, beispielsweise aus Zelleninformationen oder Zellentriangulations-Daten der Mobilfunknetz-Zellen ("Location Services", LCS). Einzelheiten hierzu finden sich beispielsweise in den ETSI-Standards ETSI TS 101 513 und ETSI TS 101 527. Bei dieser Ausführungsform liefert somit der Mobilfunknetzbetreiber die zur Navigation erforderlichen Positionsdaten direkt bei dem Server 600 an.

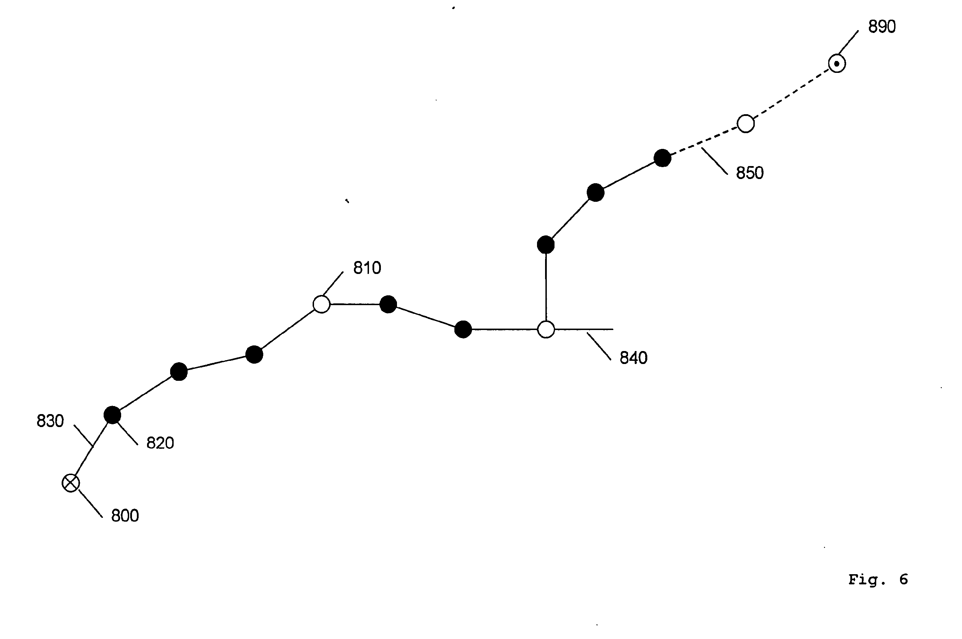

**Fig. 6** zeigt schematisch anhand eines Graphen einen mit dem erfindungsgemäßen Navigationssystem ausgeführten Navigationsvorgang entlang eines Bewegungspfades, wobei eine Ausführungsform betrachtet wird, bei der segmentierte Manöveranweisungsdaten Verwendung finden.

Das Navigationsserverseitige Guidance-Modul 630 arbeitet hierbei grundsätzlich wie im Zusammenhang mit den **Fign.** 1 und 2 sowie 4 beschrieben. Das Guidance-Modul 630 sendet jedoch zum nächsten Manöver auch alle Wegepunkte der Kanten (Längenund Breitengrad) sowie die Straßentypen und Straßennamen der Kanten an den mobilen Client-Teil 100. Ein clientseitiges Guidance-Modul der Navigationssoftware 342 übernimmt die Führung über die Wegepunkte bis zum nächsten Manöver und gleicht ständig die aktuelle Position des mobilen Client-Teil 100 über GPS mit den Wegepunkten bzw. Kanten ab. Verläßt der mobilen Client-Teil 100 die Strecke, wird die Position an das Navigationsserverseitige Guidance-Modul 630 gesandt und eine erneute Manöveranfrage gestartet. Ansonsten wird die Position bis kurz vor den Manöver-Wegepunkte nicht mehr an das navigationsserverseitige Guidance-Modul 630 geschickt. Dies ist vorteilhaft, da weniger Daten übertragen werden müssen, somit weniger Kommunikations-Gebühren anfallen und die Latenz des navigationsserverseitigen Teils 600 sowie die Latenz der Kommunikationsstrecke 500 nicht mehr kritisch ist. Ebenso können eventuell auftretende "Löcher" des Mobilfunknetzes zwischen den Manöver-Wegepunkte kompensiert werden.

In dem Graphen in **Fig. 6** sind Wegepunkte, an denen keine Manöver durchzuführen sind, vollflächig schwarz dargestellt. Wegepunkte mit spezifischen Manöveranweisungen sind als nicht ausgefüllte Kreise dargestellt. Der Startwegepunkt 800 ist mit einem Kreuz markiert.

Das clientseitige Guidance-Modul der Navigationssoftware 342 überträgt am Startpunkt 800 die aktuelle Position an das navigationsserverseitige Guidance-Modul 630. Dieses sendet daraufhin insbesondere folgende Daten zurück:
- Code des Manöver-Icons zum nächsten Manöver 810 und Straßenname der Straße nach dem Manöver 810,
- Straßentyp, Straßenname und Orientierung (Winkel) aller Kanten 830 bis zum nächsten Manöver 810, sowie
- Positionen aller Wegepunkte 820 bis zum nächsten Manöver 810.

Das clientseitige Guidance-Modul der Navigationssoftware 342 führt bis zum nächsten Manöver 810, berechnet die Entfernung zum Manöver und zeigt diese kombiniert mit einem Entfernungsbalken an. Kurz vor dem Manöver wird das nächste Segment bis zum nächsten Manöver geladen. Weicht der Fahrer von der Route ab oder folgt er nicht der Manöveranweisung 840, so wird eine erneute Anfrage an den Server gestellt. Falls ein Segment zu viele Wegepunkte und Kanten aufweist, wird nur ein erster Teil der Wegepunkte und Kanten sowie die Daten betreffend das nächste Manöver geladen und der restliche Teil 850 der Wegepunkte und Kanten nachgeladen, kurz bevor er benötigt wird. Diese Vorgehensweise wird so lange wiederholt, bis der Zielpunkt 890 erreicht ist. Je nach Speicherausstattung des mobilen Client-Teils 100 können mehrere Segmente geladen werden.

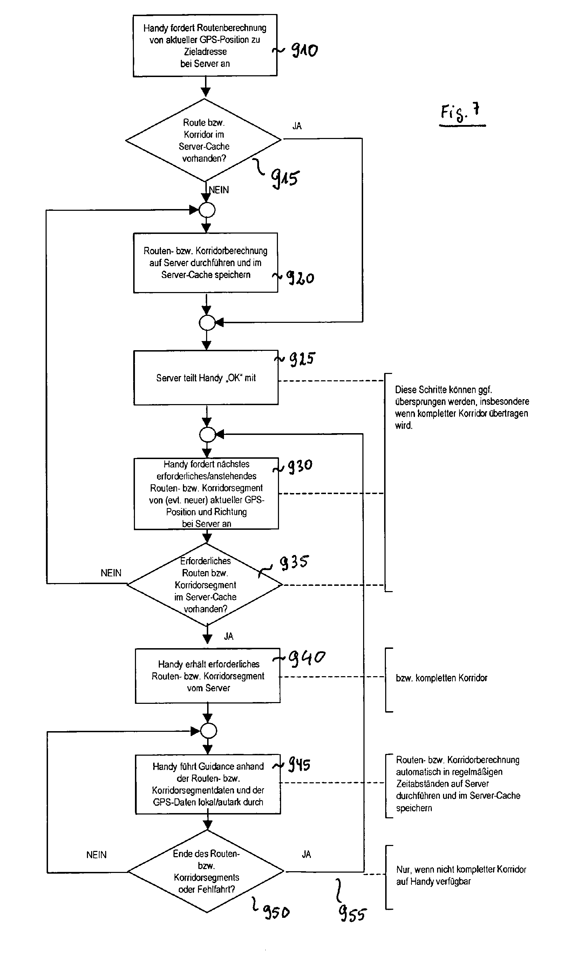

Fig. 7 zeigt ein Flußdiagramm eines Ablaufes bei einem weiter verbesserten erfindungsgemäßen Navigationssystem. Dabei ist serverseitig ein Cache-Speicher vorgesehen, der insbesondere als Bereich im Arbeitsspeicher oder als Bereich auf einem Massenspeicher ausgebildet sein kann. Ein exemplarischer Ablauf aus Fig. 7 verläuft wie folgt:
- 910: Das Mobilfunktelefon 300 fordert Route von aktueller Position (ermittelt beispielsweise durch GPS-Empfänger 400) zu der Zieladresse an - die Anfrage wird an den stationären Navigationsrechner 600 übermittelt.
- 915: Der stationäre Navigationsrechner 600 prüft, ob die in Schritt 910 nachgefragte Route bereits im Cache-Speicher gespeichert ist.
- 920: Falls die in Schritt 910 nachgefragte Route nicht im Cache-Speicher gespeichert ist, wird die Anfrage an den Routenplaner übermittelt und berechnet den kompletten Korridor.
- 925: Der stationäre Navigationsrechner 600 speichert den errechneten Korridor im Cache-Speicher und meldet an Mobilfunktelefon 300 zurück, daß die in Schritt 910 nachgefragte Route jetzt berechnet ist.
- 930: Das Mobilfunktelefon 300 fordert das Routensegment von der aktuellen Position (ermittelt beispielsweise durch GPS-Empfänger 400) an, da Fahrzeug sich möglicherweise bereits bewegt hat - eine entsprechende Anfrage geht an stationären Navigationsrechner 600.
- 935: Der stationäre Navigationsrechner 600 prüft, ob Route im Cache-Speicher verfügbar ist (siehe Schritt 920)
- 940: Der stationäre Navigationsrechner 600 sendet an Mobilfunktelefon 300 je nach verfügbaren Mobilfunktelefonspeicher und je nach vom Benutzer gewünschten Modus:
a.) ein Routensegment oder
b.) die komplette Route zum Ziel oder
c.) ein Routensegment (nicht bis zum Ziel) mit Korridor-Segmenten oder
d.) die komplette Route und ein Korridor-Segment.
- 945: Das Mobilfunktelefon 300 übernimmt die Guidance anhand der im Schritt 940 übermittelten Daten lokal.
- 950: Wenn das Mobilfunktelefon 300 ans Ende eines in Schritt 940 übermittelten Routensegments kommt (Alternative a.) dann stellt das Mobilfunktelefon 300 eine Anfrage an stationären Navigationsrechner 600, der die Route u. Korridor im Cache-Speicher vorhält.
Bei einer Fehlfahrt kann Mobilfunktelefon 300 nur im Fall der Alternativen c.) und d.) in Schritt 940 autark reagieren, und dies auch nur dann, wenn Fehlfahrt in Korridor-Segment verläuft.
- 955: Ansonsten (Alternativen a.), b.) aus Schritt 940) stellt das Mobilfunktelefon 300 eine entsprechende Anfrage an stationären Navigationsrechner 600, der Korridor-Daten im Cache-Speicher gespeichert hat. Der stationäre Navigationsrechner 600 lädt im Hintergrund automatisch nach Bedarf Korridor-Segmente nach.

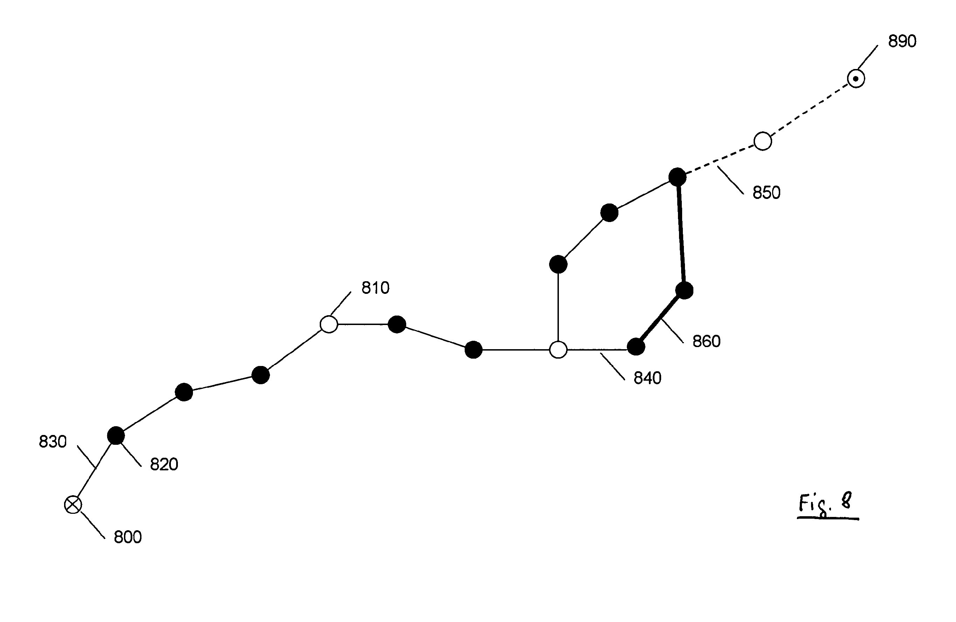

**Fig. 8** zeigt schematisch anhand eines Graphen einen mit dem verbesserten erfindungsgemäßen Navigationssystem nach **Fig. 7** ausgeführten Navigationsvorgang entlang eines Bewegungspfades.

Je nach clientseitiger Speicherausstattung können in einer weiter verbesserten Ausführungsform auch Korridorsegmente oder der komplette Korridor geladen werden. Weicht der Fahrer dann von der Route ab oder folgt er dann nicht den Manöveranweisungen 840, so ist dennoch keine erneute Anfrage an den Server erforderlich. Das clientseitige Guidance-Modul der Navigationssoftware 342 kann in diesem Fall über eine Alternativroute 860 den Fahrer weiterhin zum Ziel führen.

Eine Speicherung von Routendaten im Mobilfunktelefon 300 ermöglicht eine zumindest abschnittweise Navigation auf der Grundlage lokaler Daten, so daß der Benutzer während des Befahrens solcher Abschnitte, die aufgrund lokal gespeicherter Daten geführt werden, mittels des Mobilfunktelefons telefonieren kann, da der Funkkanal dann nicht für die Übertragung von Navigationsdaten benötigt wird. Eine Speicherung von Daten bezüglich ganzer Korridore ermöglicht eine Navigation aufgrund lokal gespeicherter Daten auch im Falle von Fehlfahrten, erhöht aber gleichzeitig das Volumen der insgesamt an das Mobilfunktelefon 300 zu übermittelnden Daten.

Zur Reduzierung des Berechnungsaufwands auf dem mobilen Client-Teil 100 werden in einer bevorzugten Ausführungsform die Koordinaten der Wegepunkte nicht in (absoluten) Längen- und Breitengrad angegeben, sondern (relativ) in Bezug auf das nächste Manöver. Desweiteren wird zu jedem Wegepunkt die Entfernung zum nächsten Manöver mitgeliefert, um diese nicht auf dem mobilen Client-Teil 100 berechnen zu müssen.

## Patentansprüche

1. Navigationssystem, umfassend
a) einen mobilen Client-Teil (100) und
b) einen stationären Navigationsserver-Teil (600),
c) wobei der mobile Client-Teil (100) und der stationäre Navigationsrechner-Teil (600) über eine Funkstrecke (500) miteinander gekoppelt sind,
d) wobei der Navigationsserver-Teil (600) in Abhängigkeit von der Position des mobilen Client-Teil (100) Manöveranweisungsdaten berechnet und an den Client-Teil überträgt, und
e) wobei der Client-Teil (100) die von dem Navigationsserver-Teil übertragenen Manöveranweisungsdaten für einen Benutzer wahrnehmbar macht.

2. Navigationssystem nach Anspruch 1, **dadurch gekennzeichnet, daß** der mobile Client-Teil (100) über die Funkstrecke (500) Positionsdaten an den stationären Navigationsrechner-Teil (600) überträgt und der Navigationsserver-Teil (600) in Abhängigkeit von den zuvor durch den mobilen Client-Teil (100) übertragenen Manöveranweisungsdaten berechnet und an den Client-Teil überträgt

3. Navigationssystem nach Anspruch 2, **dadurch gekennzeichnet, daß** der mobile Client-Teil (100) einen Satellitennavigationsempfänger (400) aufweist.

4. Navigationssystem nach Anspruch 3, **dadurch gekennzeichnet, daß** der Satellitennavigationsempfänger einen GPS-Empfänger umfaßt.

5. Navigationssystem nach Anspruch 3, **dadurch gekennzeichnet, daß** der Satellitennavigationsempfänger einen GALLILEO-Empfänger umfaßt.

6. Navigationssystem nach einem der Ansprüche 1 bis 5, **gekennzeichnet durch** mindestens eine Positionsbestimmungseinrichtung, die die Position des Client-Teils (100) auf der Grundlage von dessen Funksignalabstrahlung bestimmt.

7. Navigationssystem nach Anspruch 6, **dadurch gekennzeichnet, daß** die Position des Client-Teils (100) durch Funkpeilung bestimmt wird.

8. Navigationssystem nach Anspruch 6 oder 7, **dadurch gekennzeichnet, daß** die Position des Client-Teils (100) durch Funkpeilungs-Triangulation bestimmt wird.

9. Navigationssystem nach einem der Ansprüche 1 bis 8, **dadurch gekennzeichnet, daß** es in einem mit Rädern versehenen Landfahrzeug angeordnet ist.

10. Navigationssystem nach einem der Ansprüche 1 bis 9, **dadurch gekennzeichnet, daß** die Position des Client-Teils (100) zumindest zeitweise durch Fortschreibung einer bekannten Position mittels fortlaufend gewonnener Geschwindigkeitsdaten und Richtungsdaten erfolgt.

11. Navigationssystem nach Anspruch 10, **gekennzeichnet durch** einen Kompaß zur Bestimmung der Bewegungsrichtung.

12. Navigationssystem nach Anspruch 10 oder 11, **dadurch gekennzeichnet, daß** die Geschwindigkeitsdaten aus dem Tachometer-Subsystem des Landfahrzeuges gewonnen werden.

13. Navigationssystem nach einem der Ansprüche 1 bis 12, **dadurch gekennzeichnet, daß** der mobile Client-Teil (100) ein Mobiltelefon (300) zum Betrieb in einem Mobilfunknetz umfaßt.

14. Navigationssystem nach Anspruch 13, **dadurch gekennzeichnet, daß** der stationäre Navigationsrechner über eine Koppelschnittstelle zu einem Mobilfunknetz eines Mobilfunkbetreibers Positionsdaten des Client-Teils (100) erhält.

15. Navigationssystem nach Anspruch 14, **dadurch gekennzeichnet, daß** die Positionsdaten des Client-Teils (100) durch Funkzellen-Triangulation erhalten werden.

16. Navigationssystem nach Anspruch 13, 14 oder 15, **dadurch gekennzeichnet, daß** die Positionsdaten des Client-Teils (100) zumindest teilweise unter Verwendung von Assisted GPS erhalten werden.

17. Navigationssystem nach einem der Ansprüche 14 bis 16, **dadurch gekennzeichnet, daß** das Mobiltelefon (300) ein graphisches Anzeigedisplay (350) aufweist.

18. Navigationssystem nach Anspruch 17, **dadurch gekennzeichnet**,
a) daß mindestens zwei unterschiedlichen möglichen Manöveranweisungsdatenelementen je ein Manöveranweisungs-Icon (710) zugeordnet ist, und
b) daß das Mobiltelefon das von dem Navigationsserver-Teil übertragene Manöveranweisungsdatenelement auf dem graphischen Anzeigedisplay (350) durch Anzeige von dem entsprechenden Manöveranweisungs-Icon (710) darstellt.

19. Navigationssystem nach einem der Ansprüche 13 bis 18, **dadurch gekennzeichnet, daß** das Mobiltelefon (300) das von dem Navigationsserver-Teil (600) übertragene Manöveranweisungsdatenelement mittels einer akustischen Ausgabeeinheit (360) wahrnehmbar macht.

20. Navigationssystem nach Anspruch 17 oder 18, **dadurch gekennzeichnet, daß** das Mobiltelefon (300) eingerichtet ist, für mindestens ein Manöveranweisungsdatenelement ein komplexes Manöveranweisungs-Icon (710) darzustellen, das situationsabhängig vom Navigationsserver-Teil (600) auf das Mobiltelefon (300) übertragen wird und je eine bestimmte Wegetopographie veranschaulicht.

21. Navigationssystem nach Anspruch 20, **dadurch gekennzeichnet, daß** das Mobiltelefon (300) eingerichtet ist, für mindestens ein Manöveranweisungsdatenelement ein komplexes Manöveranweisungs-Icon (710) darzustellen, das situationsabhängig vom Navigationsserver-Teil (600) auf das Mobiltelefon (300) übertragen wird und eine Topographie je eines Straßentunnels veranschaulicht.

22. Navigationssystem nach einem der Ansprüche 1 bis 21, **dadurch gekennzeichnet, daß** die Datenübertragung zwischen dem Client-Teil (100) und dem Navigationsserver-Teil (600) unter Verwendung des TCP/IP-Protokolls abläuft.

23. Navigationssystem nach einem der Ansprüche 1 bis 22, **dadurch gekennzeichnet, daß** die Datenübertragung zwischen dem Client-Teil (100) und dem Navigationsserver-Teil (600) unter Verwendung des HTTP-Protokolls abläuft.

24. Navigationssystem nach einem der Ansprüche 1 bis 23, **dadurch gekennzeichnet, daß** die Datenübertragung zwischen dem Client-Teil (100) und dem Navigationsserver-Teil (600) unter Verwendung des HTTPS-Protokolls abläuft.

25. Navigationssystem nach einem der Ansprüche 1 bis 24, **dadurch gekennzeichnet, daß** die Datenübertragung zwischen dem Client-Teil (100) und dem Navigationsserver-Teil (600) unter Übermittlung von datenvolumenminimierten Datentelegrammen abläuft.

26. Navigationssystem nach einem der Ansprüche 1 bis 25, **dadurch gekennzeichnet, daß** die Häufigkeit der Datenübertragung zwischen dem Client-Teil (100) und dem Navigationsserver-Teil (600) von der Fortbewegungsgeschwindigkeit des Client-Teils (100) abhängt.

27. Navigationssystem nach Anspruch 26, **dadurch gekennzeichnet, daß** die Häufigkeit der Datenübertragung zwischen dem Client-Teil (100) und dem Navigationsserver-Teil (600) bei Stillstand des Client-Teils (100) vermindert wird.

28. Navigationssystem nach einem der Ansprüche 1 bis 25, **dadurch gekennzeichnet, daß** die Häufigkeit der Datenübertragung zwischen dem Client-Teil (100) und dem Navigationsserver-Teil (600) vom Abstand des Client-Teils (100) zum nächsten Manöver abhängt.

29. Navigationssystem nach einem der Ansprüche 1 bis 28, **dadurch gekennzeichnet, daß** die Häufigkeit der Datenübertragung zwischen dem Client-Teil (100) und dem Navigationsserver-Teil (600) vom Typ der befahrenen Straße abhängt.

30. Navigationssystem nach einem der Ansprüche 1 bis 29, **dadurch gekennzeichnet, daß** der Navigationsserver-Teil (600) eingerichtet ist, positionsabhängige Sonderdatenelemente an den Client-Teil (100) zu übertragen, die an der errechneten Route oder an der Position des Client-Teils (100) liegende vorbestimmte "Points of Interest" bezeichnen.

31. Navigationssystem nach einem der Ansprüche 1 bis 29, **dadurch gekennzeichnet, daß** der Navigationsserver-Teil (600) eingerichtet ist, positionsabhängig Sonderdatenelemente an den Client-Teil (100) zu übertragen, die an der errechneten Route oder an der Position des Client-Teils (100) liegende vorbestimmte "Points of Interest" bezeichnen.

32. Navigationssystem nach einem der Ansprüche 1 bis 31, **dadurch gekennzeichnet, daß** der Navigationsserver-Teil (600) eingerichtet ist, positionsabhängig Sonderdatenelemente an den Client-Teil (100) zu übertragen, die Werbedarbietungen codieren.

33. Navigationssystem nach einem der Ansprüche 1 bis 32, **dadurch gekennzeichnet, daß** der Navigationsserver-Teil (600) eingerichtet ist, in Abhängigkeit von der Geschwindigkeit des Client-Teils (100) Sonderdatenelemente an den Client-Teil (100) zu übertragen, die Werbedarbietungen codieren.

34. Navigationssystem nach Anspruch 33, **dadurch gekennzeichnet, daß** der Navigationsserver-Teil (600) eingerichtet ist, nur bei Stillstand des Client-Teils (100) Sonderdatenelemente an den Client-Teil (100) zu übertragen, die Werbedarbietungen codieren.

35. Navigationssystem nach einem der Ansprüche 32 bis 34, **dadurch gekennzeichnet, daß** der Navigationsserver-Teil (600) eingerichtet ist, nur dann Sonderdatenelemente an den Client-Teil (100) zu übertragen, die Werbedarbietungen codieren, wenn der Client-Teil (100) in einem Betriebsmodus aus einer Menge von mehreren Betriebsmodi arbeitet, bei dem Werbedarbietungen zugelassen sind.

36. Navigationssystem nach einem der Ansprüche 1 bis 35, **dadurch gekennzeichnet, daß** die vom Client-Teil (100) benutzte Route für sofortige und/oder zukünftige Auswertungen temporär und/oder permanent gespeichert wird.

37. Navigationssystem nach Anspruch 36, **dadurch gekennzeichnet, daß** ein ausgewählter Wegepunkt aus der gespeicherten Route als neuer Zielpunkt vorgegeben werden kann.

38. Navigationssystem nach einem der Ansprüche 1 bis 37, **dadurch gekennzeichnet, daß** die aktuelle Position des Client-Teils (100) als neuer Zielpunkt vorgegeben werden kann.

39. Navigationssystem nach Anspruch 36, **dadurch gekennzeichnet, daß** ein ausgewählter früherer Wegepunkt aus der gespeicherten Route als neuer Zielpunkt in einen Zielpunktspeicher vorgegeben werden kann.

40. Navigationssystem nach einem der Ansprüche 1 bis 39, **dadurch gekennzeichnet**,
a) daß der Client-Teil (100) einen lokales Guidance-Modul umfaßt,
b) wobei während einer Anfangsphase einer Bewegungsstrecke der Navigationsserver-Teil (600) in Abhängigkeit von der Position des mobilen Client-Teil (100) Manöveranweisungsdaten berechnet und an den Client-Teil überträgt,
c) nach dem Ende der Anfangsphase das lokale Guidance-Modul Manöveranweisungsdaten berechnet, und
d) wobei der Client-Teil (100) die von dem Navigationsserver-Teil übertragenen Manöveranweisungsdaten und die durch das lokale Guidance-Modul berechneten Manöveranweisungsdaten für einen Benutzer wahrnehmbar macht.

41. Navigationssystem nach Anspruch 40, **dadurch gekennzeichnet, daß** die Dauer der Anfangsphase kleiner als 60 s ist.

42. Navigationssystem nach Anspruch 40 oder 41, **dadurch gekennzeichnet, daß** das lokale Guidance-Modul Manöveranweisungsdaten nur solange berechnet, wie der Client-Teil (100) einen während der Anfangsphase festgelegten Navigationskorridor nicht verläßt, wobei nach einem eventuellen Verlassen des Navigationskorridors zumindest zeitweise der Navigationsserver-Teil (600) in Abhängigkeit von der Position des mobilen Client-Teil (100) Manöveranweisungsdaten berechnet und an den Client-Teil (100) überträgt.

43. Navigationssystem nach einem der Ansprüche 1 bis 42, **dadurch gekennzeichnet, daß** der mobile Client-Teil (100) einen programmierbaren Datenprozessor umfaßt, auf dem quasi-gleichzeitig oder zeitlich aufeinanderfolgend mehrere Prozesse ablaufen können, wobei mindestens in einem ersten Prozeß ein Navigationsprogramm, das die Kopplung des mobilen Client-Teils (100) und des stationären Navigationsrechner-Teils (600) über eine Mobilfunkstrecke (500) implementiert und das die von dem Navigationsserver-Teil übertragenen Manöveranweisungsdaten für einen Benutzer wahrnehmbar macht, abläuft, und in einem zweiten Prozeß ein zweites Programm abläuft, wobei das zweite Programm einen Zielpunkt an das Navigationsprogramm übergeben kann.

44. Navigationssystem nach einem der Ansprüche 1 bis 43, **dadurch gekennzeichnet, daß** der Client-Teil (100) eine externe Datenschnittstelle aufweist, mittels der eine Datenverbindung mit mindestens einem externen Gerät hergestellt werden kann.

45. Navigationssystem nach Anspruch 44, **dadurch gekennzeichnet, daß** die externe Datenschnittstelle einen elektrischen Steckverbinder umfaßt.

46. Navigationssystem nach Anspruch 44, **dadurch gekennzeichnet, daß** die externe Datenschnittstelle einen elektrischen Steckverbinder umfaßt, über den Signale nach dem RS232-Standard geführt werden.

47. Navigationssystem nach Anspruch 44, **dadurch gekennzeichnet, daß** die externe Datenschnittstelle eine Datenfunkschnittstelle umfaßt.

48. Navigationssystem nach Anspruch 47, **dadurch gekennzeichnet, daß** die externe Datenschnittstelle eine Bluetooth-Datenfunkschnittstelle umfaßt.

49. Navigationssystem nach Anspruch 47, **dadurch gekennzeichnet, daß** die externe Datenschnittstelle eine WLAN/WiFi-Datenfunkschnittstelle umfaßt.

50. Navigationssystem nach Anspruch 44, **dadurch gekennzeichnet, daß** die externe Datenschnittstelle eine IrDA-Datenübertragungseinrichtung umfaßt.

51. Navigationssystem nach Anspruch 44, **dadurch gekennzeichnet, daß** die externe Datenschnittstelle eine durch das Mobilfunknetz vermittelte Datenfunkschnittstelle gemäß einem Standard aus der die Standards "SMS", "EMS", "MMS" und "WAP Push" umfassenden Gruppe von Standards umfaßt.

52. Navigationssystem nach einem der Ansprüche 44 bis 51, **dadurch gekennzeichnet, daß** der Client-Teil (100) darauf eingerichtet ist, daß das mindestens eine externe Gerät über die externe Datenschnittstelle einen Zielpunkt vorgeben kann.

53. Navigationssystem nach einem der Ansprüche 44 bis 52, **dadurch gekennzeichnet, daß** der Client-Teil (100) darauf eingerichtet ist, daß die Datenkommunikation zwischen dem Client-Teil (100) und dem mindestens einen externen Gerät unter Verwendung des TCP/IP-Datenübertragungsprotokolls abgewickelt wird.

54. Navigationssystem nach einem der Ansprüche 44 bis 53, **dadurch gekennzeichnet, daß** der Client-Teil (100) darauf eingerichtet ist, daß die Datenkommunikation zwischen dem Client-Teil (100) und dem mindestens einen externen Gerät unter Verwendung des HTTP-Datenübertragungsprotokolls abgewickelt wird.

55. Navigationssystem nach einem der Ansprüche 44 bis 53, **dadurch gekennzeichnet, daß** der Client-Teil (100) darauf eingerichtet ist, daß die Datenkommunikation zwischen dem Client-Teil (100) und dem mindestens einen externen Gerät unter Verwendung des HTTPS-Datenübertragungsprotokolls abgewickelt wird.

56. Navigationssystem nach einem der Ansprüche 44 bis 55, **dadurch gekennzeichnet, daß** der Client-Teil (100) darauf eingerichtet ist, daß das mindestens eine externe Gerät dem Client-Teil (100) mindestens einen Zielpunkt vorgeben kann.

57. Navigationssystem nach einem der Ansprüche 44 bis 56, **dadurch gekennzeichnet, daß** daß der Client-Teil (100) darauf eingerichtet ist, daß das mindestens eine externe Gerät dem Client-Teil (100) ein anderes Navigationssystem ist.

58. Navigationssystem nach einem der Ansprüche 44 bis 57, **dadurch gekennzeichnet, daß** daß der Client-Teil (100) darauf eingerichtet ist, daß das mindestens eine externe Gerät dem Client-Teil (100) ein anderes Navigationssystem ist, und daß der Client-Teil (100) dem anderen Navigationssystem einen Zielpunkt vorgeben kann.

59. Navigationssystem nach einem der Ansprüche 1 bis 58, **dadurch gekennzeichnet, daß** der Navigationsserver-Teil (600) einen Cache-Speicher zur Zwischenspeicherung von Routensegmenten und/oder von kompletten Routen aufweist.

60. Navigationssystem nach einem der Ansprüche 1 bis 59, **dadurch gekennzeichnet, daß** der Client-Teil (100) einen Speicher zur Zwischenspeicherung von mindestens einem Routensegment und/oder von mindestens einer kompletten Route aufweist und so eingerichtet ist, daß abschnittweise eine lokale Führung auf der Grundlage der zwischengespeicherten Daten möglich ist.

61. Navigationssystem nach einem der Ansprüche 1 bis 60, **dadurch gekennzeichnet, daß** der Client-Teil (100) einen Speicher zur Zwischenspeicherung von mindestens einem Korridorsegement und/oder von mindestens einem kompletten Korridor aufweist und so eingerichtet ist, dass auch dann abschnittsweise eine lokale Führung auf Grundlage der zwischengespeicherten Daten möglich ist, wenn ein Fahrer sich verfährt und so diesen über eine Alternativroute 860 weiterhin zum Ziel führt

62. Client-Teil (100), eingerichtet zum Betrieb in einem Navigationssystem nach einem der Ansprüche 1 bis 61.

63. Navigationsserver-Teil (600), eingerichtet zum Betrieb in einem Navigationssystem nach einem der Ansprüche 1 bis 61.

64. Navigationsverfahren zur Navigation mit einer Navigationsvorrichtung nach einer der Ansprüche 1 bis 61, **dadurch gekennzeichnet, daß** der Navigationsserver-Teil (600) an den Client-Teil wegabschnittsweise Daten zu Wegepunkten und zu Wegepunkte verbindenden Strecken überträgt, wobei in einem ersten Teilschritt nur Daten betreffend einen ersten Teil der Wegepunkte und Strecken sowie die Daten betreffend das nächste durchzuführende Manöver von dem Navigationsserver-Teil (600) an den Client-Teil (100) übertragen werden, und wobei in einem zweiten Schritt Daten betreffend mindestens einen zweiten Teil (850) der Wegepunkte und Strecken übertragen werden.
